# EUROPEAN PATENT APPLICATION

(11) **EP 2 953 427 A1**
(43) Date of publication of application: **09.12.2015**
(21) Application number: 15165847.3
(22) Date of filing: 30.04.2015
(51) Int. Cl.: H05B 33/08

(54) **LED POWER CIRCUIT AND LAMP USING THE SAME**

(30) Priority: 30.05.2014 TW 103209701 U; 12.01.2015 TW 104100945
(71) Applicant: Lumion Tech Co., Ltd., 11579 Taipei City (TW)
(72) Inventor: Hung, Yi-Sung, 22042 New Taipei City (TW); Chen, Hsieh-Chia, 22141 New Taipei City (TW); Ho, Chien-Wen, 32555 Longtan Township, Taoyuan County (TW)
(74) Representative: Viering, Jentschura & Partner mbB Patent- und Rechtsanwälte

(57) **Abstract**

An LED power circuit (1) for converting AC power into DC power to drive at least one LED to output light. The LED power circuit (1) includes an input unit (12), a current suppression unit (14), a power adjustment unit (15), a rectifier module (16) and an output unit (20). The input unit (12) receives the AC power. The current suppression unit (14) is coupled to the input unit (12). The current suppression unit (14) suppresses a current pulse and correspondingly outputs the AC power. The power adjustment unit (15) is coupled to the current suppression unit (14) to control and adjust the current and/or the power of the AC power. The rectifier module (16) is coupled to the power adjustment unit (15) to convert the AC power into DC power. The output unit (20) is coupled to the rectifier module (16) and at least one LED. The output unit (20) outputs the DC power to the at least one LED.

## Description

### BACKGROUND

### 1. Technical Field

The present invention generally relates to a light-emitting diode (LED) power module and a lamp using the same and, more particularly, to an LED power circuit for lighting control and a lamp using the LED power circuit.

### 2. Description of Related Art

Currently, the green lighting industry is powered by LEDs as a light source. LEDs are driven by direct-current (DC) power to convert electricity to light.

Generally, an LED receives a DC voltage from a regulator integrated circuit (IC) that converts AC power to DC power to provide a voltage for driving the LED. For example, the regulator IC may convert AC power to a 5-V DC voltage.

However, during the operation of the regulator IC, miniaturization with less heat sink area causes the heat from the LED to accumulate so that the regulator IC operates at a high temperature, which may result in malfunction of the regulator IC and even of the LED.

Since the light-emitting angle of a single LED is small and the brightness is low, a plurality of LEDs are often used in a lamp to provide sufficient illuminance in lighting applications. However, to drive the plurality of LEDs, the regulator IC has to provide higher DC power, which speeds up the malfunction of the regulator IC and of the LEDs due to accumulated heat from electronics operating at high temperatures.

Even though a heat sink structure may be used for heat dissipation, the number of LEDs that the regulator IC can drive is limited. When a large number of LEDs are to be driven, a large transformer with a high turn ratio is required. The large transformer occupies a large volume and has high cost.

Therefore, the present invention provides an LED power circuit and a lamp using the LED power circuit to overcome the foregoing problems.

### SUMMARY

The present invention provides an LED power circuit and a lamp using the LED power circuit, in which a power adjustment unit is used to increase the capacitance of a multilayered ceramic capacitor and lower the voltage across the multilayered ceramic capacitor so that the LED power circuit and the lamp have longer lifetime, and reduced volume and weight.

One embodiment of the present invention provides a light-emitting diode (LED) power circuit capable of converting a first electrical energy to a second electrical energy and outputting the second electrical energy to drive at least one LED. The at least one LED converts the second electrical energy to light. The first electrical energy is alternating-current (AC) power and the second electrical energy is direct-current (DC) power. The LED power circuit includes an input unit, a current suppression unit, a power adjustment unit, a rectifier module and an output unit. The input unit receives the first electrical energy. The current suppression unit is coupled to the input unit. The current suppression unit suppresses a current pulse and correspondingly outputs the first electrical energy. The power adjustment unit is coupled to the current suppression unit. The power adjustment unit controls and adjusts the current and the power of the first electrical energy. The rectifier module is coupled to the power adjustment unit. The rectifier module converts the first electrical energy to the second electrical energy. The output unit is coupled to the rectifier module and the at least one LED. The output unit outputs the second electrical energy to the at least one LED.

One embodiment of the present invention further provides a light-emitting diode (LED) power circuit capable of converting a first electrical energy to a second electrical energy and outputting the second electrical energy to drive at least one LED. The at least one LED converts the second electrical energy to light. The first electrical energy is alternating-current (AC) power and the second electrical energy is direct-current (DC) power. The LED power circuit includes an input unit, a current suppression unit, a rectifier module, a constant current control unit and an output unit. The input unit receives the first electrical energy. The current suppression unit is coupled to the input unit. The current suppression unit suppresses a current pulse and correspondingly outputs the first electrical energy. The rectifier module is coupled to the current suppression unit and converts the first electrical energy to the second electrical energy. The constant current control unit is coupled to the rectifier module and adjusts the second electrical energy to output a constant output DC current. The output unit is coupled to the rectifier module. The output unit outputs the output DC current to the at least one LED.

One embodiment of the present invention further provides a lamp including an LED power circuit.

In order to further understand the techniques, means and effects of the present disclosure, the following detailed descriptions and appended drawings are hereby referred to, such that, and through which, the purposes, features and aspects of the present disclosure can be thoroughly and concretely appreciated; however, the appended drawings are merely provided for reference and illustration, without any intention to be used for limiting the present disclosure.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIG. 1 is a block diagram of an LED power circuit according to one embodiment of the present invention;
FIG. 2 is a schematic diagram of a plurality of LED power circuits connected in series according to another embodiment of the present invention;
FIG. 3 is a schematic diagram of a plurality of LED power circuits connected in parallel according to another embodiment of the present invention;
FIG. 4 is a schematic diagram of a mosaic lamp including a plurality of lamps according to another embodiment of the present invention;
FIG. 5 is a block diagram of an LED power circuit according to another embodiment of the present invention;
FIG. 6 is a circuit diagram of an LED power circuit according to another embodiment of the present invention; and
FIG. 7 is a circuit diagram of an LED power circuit according to another embodiment of the present invention.

### DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts.

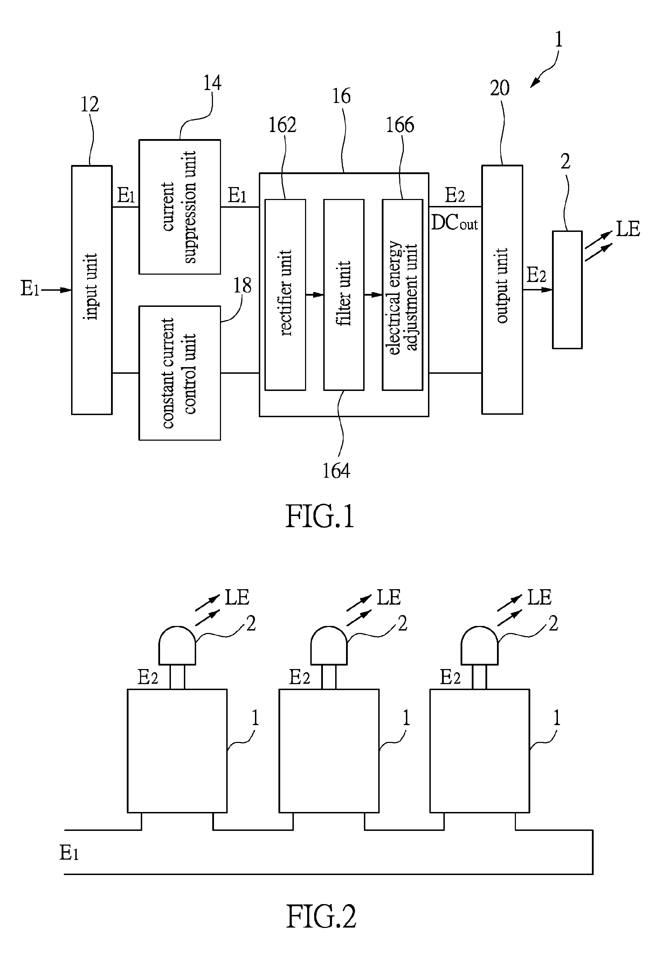

FIG. 1 is a block diagram of an LED power circuit according to one embodiment of the present invention. With reference to FIG. 1, the LED power circuit 1 converts a first electrical energy E1 to a second electrical energy E2. The second electrical energy E2 drives an LED 2 so that the LED 2 converts the second electrical energy E2 to light LE. The first electrical energy E1 is, for example, alternating-current (AC) power, and the second electrical energy E2 is, for example, direct-current (DC) power. The voltage of the AC power ranges from 50V to 380 V. The present invention is, however, not limited to the previous example of the AC power range.

It should be noted that the LED 2 of the present embodiment is a single LED as an example. The present invention is, however, not limited to the number of LEDs.

The LED power circuit 1 includes an input unit 12, a current suppression unit 14, a rectifier module 16, a constant current control unit 18 and an output unit 20. Practically, the current suppression unit 14 is coupled to the input unit 12 and the rectifier module 16. The constant current control unit 18 is coupled to the input unit 12 and the rectifier module 16. The output unit 20 is coupled to the rectifier module 16 and the LED 2. The present invention is, however, not limited to the previous example of the LED power circuit 1.

More particularly, the input unit 12 receives the first electrical energy E1. In one embodiment, the input unit 12 may be a lamp holder, which complies with the lamp holder standard. Alternatively, the input unit 12 may be a connection port coupled to AC power. The present invention is, however, not limited to the previous example of the input unit 12. The current suppression unit 14 is coupled to the input unit 12 and suppresses a current pulse (not shown). Generally, the current pulse is, for example, a surge current, a transient surge current, a transient charge current or an inrush current. The present invention is, however, not limited to the previous examples of the current pulse. The current pulse occurs, for example, at the beginning or the end of power delivery. Since the peak current of the current pulse is high enough to cause damage to the electronic devices on the circuit or even burn out the LED 2, in the present embodiment, the use of the current suppression unit 14 can prevent damage caused by the current pulse.

More particularly, the current suppression unit 14 is capable of effectively suppressing the high-peak transient current. For example, the current suppression unit 14 may use a Zener diode operating in the breakdown region to prevent the current suppression unit 14 from outputting a current pulse. In other embodiments, the current suppression unit 14 is a protection circuit including, for example, a resistor or a plurality of resistors connected in series. The present invention is, however, not limited to the previous examples of the current suppression unit 14. Moreover, the current suppression unit 14 may not only suppress the current pulse, but also can convert the energy excluding the current pulse to the first electrical energy E1.

The rectifier module 16 is coupled to the current suppression unit 14. The rectifier module 16 converts the first electrical energy E1 to the second electrical energy E2. In the present embodiment, the rectifier module 16 includes a rectifier unit 162, a filter unit 164 and an electrical energy adjustment unit 166. Practically, the filter unit 164 is coupled to the rectifier unit 162 and the electrical energy adjustment unit 166. The first electrical energy E1 is full-wave rectified or half-wave rectified by the rectifier unit 162. The filter unit 164 determines an output DC (DCout) current from the first electrical energy E1 being rectified. The electrical energy adjustment unit 166 outputs the second electrical energy E2 including the output DC (DCout) current.

In another embodiment for full-wave rectification, the rectifier module 16 may include a transformer (not shown). By determining the turn ratio of the primary winding to the secondary winding of the transformer, the voltage of the first electrical energy E1 may be obtained. For example, the transformer may be a center-tapped transformer. In still another embodiment for full-wave rectification, the rectifier module 16 may be a bridge rectifier (not shown). The first electrical energy E1 is full-wave rectified by the bridge rectifier. The present invention is, however, not limited to the previous examples of the rectifier module 16.

The constant current control unit 18 is coupled to the rectifier module 16. The constant current control unit 18 adjusts the second electrical energy E2. Since the constant current control unit 18 is serially coupled to the rectifier module 16, the output DC (DCout) current from the rectifier module 16 is limited by the constant current control unit 18 so as to provide a constant output DC (DCout) current. For example, the constant current control unit 18 may include a transistor (not shown) and a plurality of diodes (not shown). The transistor and the plurality of diodes enable the rectifier module 16 to output the second electrical energy E2 with an output DC (DCout) current.

The output unit 20 is coupled to the rectifier module 16. The output unit 20 outputs the adjusted second electrical energy E2 to the LED 2. The output unit 20 is implemented using, for example, a compensation circuit, a voltage-dividing circuit, a regulator circuit or a filter circuit. The present invention is, however, not limited to the previous examples of the output unit 20.

FIG. 2 is a schematic diagram of a plurality of LED power circuits connected in series according to another embodiment of the present invention. With reference to FIG. 2, a plurality of LED power circuits 1 in FIG. 1 are provided. Each of the plurality of LED power circuits 1 is, respectively, coupled to one of a plurality of LEDs 2. Similarly, each LED power circuit 1 includes an input unit 12, a current suppression unit 14, a rectifier module 16, a constant current control unit 18 and an output unit 20.

The input units 12 of the plurality of LED power circuits 1 are serially connected. In other words, a next-stage input unit 12 is coupled to a previous-stage input unit 12. For example, as shown in FIG. 2, two adjacent LED power circuits 1 are serially connected.

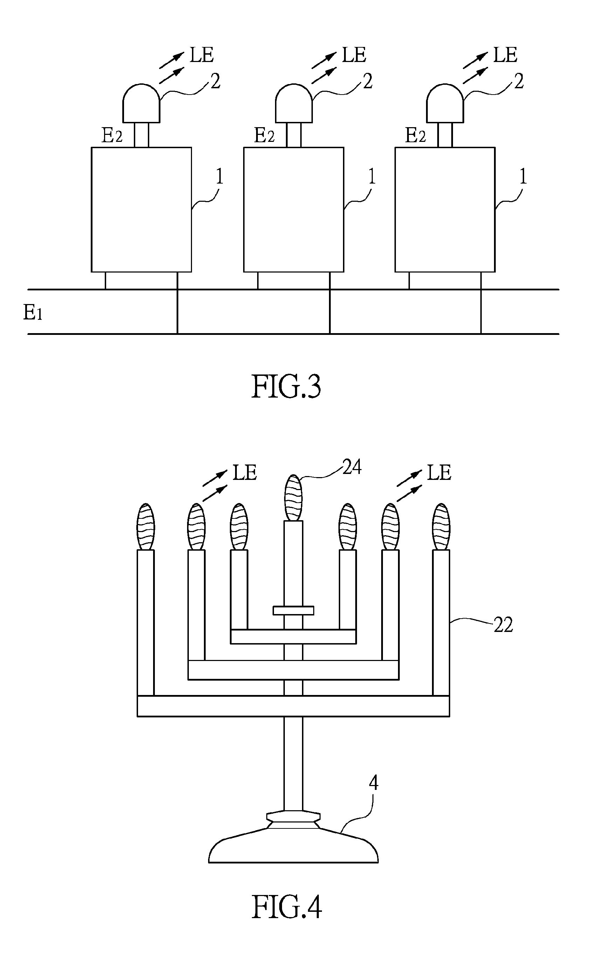

FIG. 3 is a schematic diagram of a plurality of LED power circuits connected in parallel according to another embodiment of the present invention. With reference to FIG. 3, a plurality of input units 12 of a plurality of LED power circuits 1 in FIG. 3 are connected in parallel. In other words, the plurality of input units 12 simultaneously receive the first electrical energy E1 as shown in FIG. 3.

It should be noted that one object of the present invention is to provide an LED power circuit 1 capable of driving a plurality of LEDs 2 with the same AC voltage (for example, the first electrical energy E1). The plurality of LEDs 2 may be driven by AC power in a wide range.

Another object of the present invention is to provide an LED power circuit 1 capable of providing each LED 2 with a constant driving current so as to manage power control of each LED 2. Compared to the conventional LED, the LED 2 of the present invention may produce less heat.

Another object of the present invention is to provide an LED power circuit 1 with no additional heat sink structure on each of the plurality of LED 2. For example, with the use of a ceramic lamp shade, a glass lamp shade or filling gas in the lamp shade for heat dissipation, the manufacturing cost and maintenance cost of the LED power circuit 1 may be effectively reduced.

Compared to the prior art, the LED power circuit 1 of the present invention receives a large-range input AC power, for example, from 50 V to 380 V. The current suppression unit 14 is capable of suppressing a sudden current pulse to prevent the current pulse from damaging the electronic devices or the LED 2 in the circuit. Furthermore, the LED power circuit 1 provides the LED 2 with a current to drive the LED 2 so that the LED 2 consumes constant power. By adjusting power consumption, the LED 2 can be controlled to consume less power to reduce the lamp temperature with less heat accumulation.

FIG. 4 is a schematic diagram of a mosaic lamp including a plurality of lamps according to another embodiment of the present invention. With reference to FIG. 4, a mosaic lamp 4 is shown. The mosaic lamp 4 provides a plurality of lamp holders 22. Each of the plurality of lamp holders 22 has a lamp 24 disposed thereon. The plurality of lamps 24 include LED power circuits 1 as shown in FIG. 1. The plurality of lamp holders 22 are electrically coupled in a fashion as the plurality of LED power circuits 1 shown in FIG. 2 or FIG. 3.

Another object of the present invention is to provide a mosaic lamp 4 including, for example, a plurality of lamps 24, each using an LED power circuit 1. In the mosaic lamp 4, the power consumption of each lamp 24 does not have to be calculated individually. Each lamp 24 may operate independently and each LED power circuit 1 may be replaced individually. Since each lamp 24 may operate independently, there is no issue concerning impedance matching between the plurality of lamps 24, which results in easy installation and illuminance adjustment. In other words, a lighting designer may conduct lighting design easily.

When an LED power circuit 1 combines with an LED 2 to provide a lamp 24, such lamp 24 may be used in lamp equipment including multiple lamps 24, for example, the mosaic lamp 4. Each lamp 24 may be coupled in series or in parallel to the AC power, and driven by the LED power circuit 1, respectively, to output a constant output DC current with constant power consumption. If one of the plurality of lamps 24 is mal-functional, the other lamps 24 may continue operating independently without being affected.

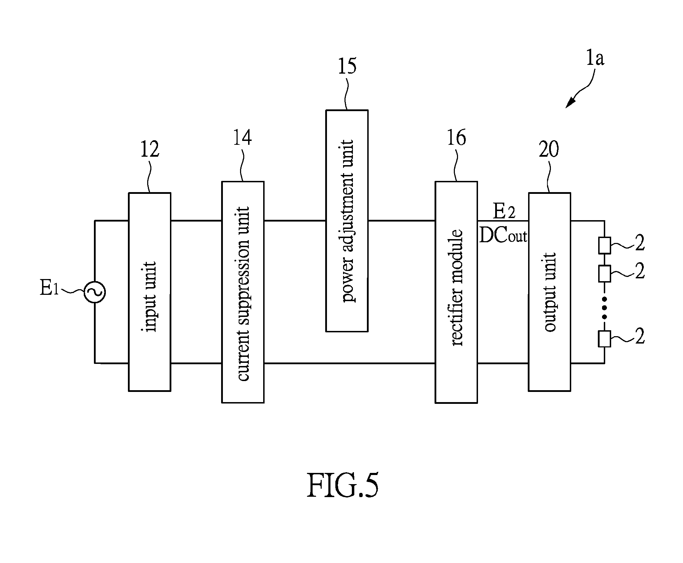

FIG. 5 is a block diagram of an LED power circuit according to another embodiment of the present invention. With reference to FIG. 5, an LED power circuit 1a is coupled to one or more LEDs 2. The LED power circuit 1a includes an input unit 12, a current suppression unit 14, a power adjustment unit 15, a rectifier module 16 and an output unit 20.

Practically, the current suppression unit 14 is coupled to the input unit 12 and the power adjustment unit 15. The power adjustment unit 15 is coupled to the current suppression unit 14 and the rectifier module 16. The output unit 20 is coupled to the LEDs 2 and the rectifier module 16. The input unit 12 and the current suppression unit 14 are similar to those in FIG. 1, and descriptions thereof are not repeated herein.

Furthermore, the power adjustment unit 15 in the present embodiment uses multilayered ceramic capacitors (MLCC) instead of conventional polyester capacitors (CL), polypropylene film CBB capacitors and electrolytic capacitors (EC). Generally, compared with conventional polyester capacitors (CL), polypropylene film CBB capacitors (CBB) and electrolytic capacitors (EC), multilayered ceramic capacitors (MLCC) according to the present embodiment have disadvantages such as lower capacitance, lower withstand voltage and poorer AC power characteristics when they are used in AC power applications. However, in the present embodiment, a non-isolating RC buck technique may be used to overcome the foregoing drawbacks and bottlenecks.

More particularly, the power adjustment unit 15 determines the capacitance of the multilayered ceramic capacitor according to the load current and the operation frequency of the AC power. The RC buck technique uses the capacitive reactance of the multilayered ceramic capacitor as a current limiter. Accordingly, the multilayered ceramic capacitor serves as a means for limiting the current and dynamically allocating the voltage across the multilayered ceramic capacitor and the load. Certainly, the power adjustment unit 15 controls and adjusts the current and the power of the first electrical energy E1. Practically, the power adjustment unit 15 is, for example, a circuit including a drain resistor connected in parallel with a multilayered ceramic capacitor (MLCC), a circuit including a drain resistor connected in parallel with a plurality of multilayered ceramic capacitors, or a circuit including a plurality of serially connected drain resistors connected in parallel with a plurality of multilayered ceramic capacitors. The present invention is, however, not limited to the previous examples of the power adjustment unit 15.

It should be noted that the power adjustment unit 15 and the current suppression unit 14 form a circuit capable of adjusting the power factor and the conversion efficiency of the AC power. Moreover, the power adjustment unit 15, the rectifier module 16 and the output unit 20 can be combined as a circuit for increasing the capacitance of the multilayered ceramic capacitor (MLCC) and lowering the voltage across the multilayered ceramic capacitor (MLCC) so as to overcome the foregoing drawbacks and bottlenecks concerning the disadvantages such as lower capacitance, lower withstand voltage and poorer AC power characteristics of the multilayered ceramic capacitor (MLCC). The present invention is, however, not limited to the previous examples of the circuit formed by the power adjustment unit 15 and the current suppression unit 14 and the circuit formed by the power adjustment unit 15, the rectifier module 16 and the output unit 20.

Moreover, the shape of the multilayered ceramic capacitor is, for example, sheet-like, tubular, or disk-like. The present invention is, however, not limited to the previous examples of the shape of the multilayered ceramic capacitor. More particularly, the multilayered ceramic capacitor has a small dissipation factor and a high resonance frequency, which is close to an ideal capacitor. Moreover, the capacitance of the multilayered ceramic capacitor may be further enhanced by improving the ceramic sheet stacking technique and/or the surface-mount technology (SMT). In addition, the multilayered ceramic capacitor is very suitable for use in compact electronic products because it has a small volume and is easily integrated on a chip.

The rectifier module 16 is, for example, a rectifier circuit, a full-wave rectifier circuit or a half-wave rectifier circuit. Practically, the rectifier module 16 performs full-wave rectification and half-wave rectification. More particularly, the rectifier module 16 converts AC power to DC power and outputs the DC current to the output unit 20.

The output unit 20 is coupled to the loads of a plurality of LEDs 2. Practically, the output unit 20 includes a plurality of resistors and/or capacitors. The present invention is, however, not limited to the previous examples of the output unit 20. More particularly, the output unit 20 outputs the DC power to the loads and performs adjustment, compensation, voltage-dividing and filtering according to the power requirements of the loads of the LEDs 2.

Moreover, the LEDs 2 may be implemented with a lamp, a lamp strip or lamp equipment. The LEDs 2 may be connected in series or in parallel to output light with different brightness, power or light energies. Alternatively, the LEDs 2 may output light with different brightness, power or light energies according to the supplied current of the AC power.

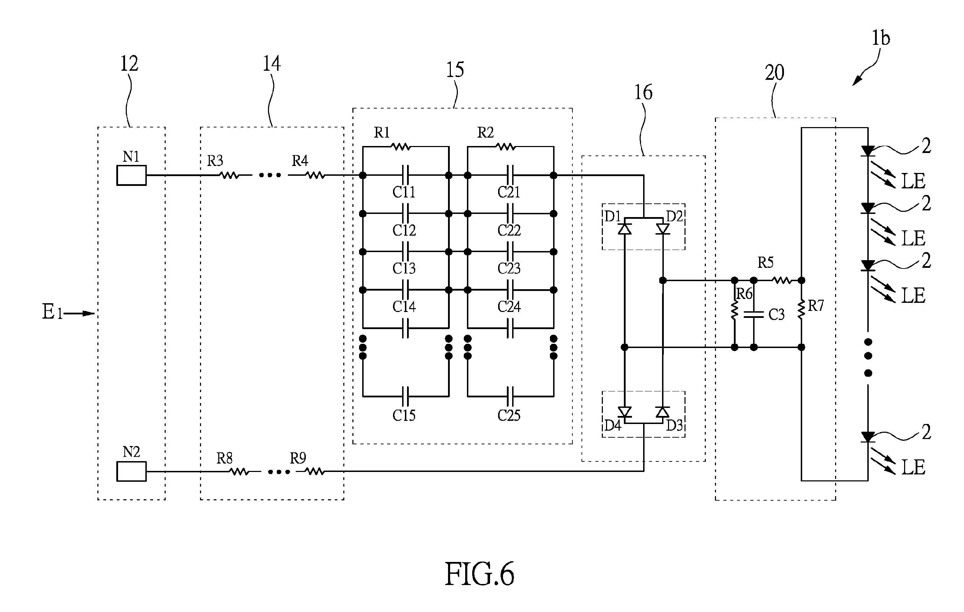

FIG. 6 is a circuit diagram of an LED power circuit according to another embodiment of the present invention. With reference to FIG. 6 and FIG. 5, the present embodiment provides a circuit diagram of an LED power circuit in FIG. 5. The person with ordinary skill in the art may make modifications to the LED power circuit 1b based on the spirit of the present invention. Therefore, the present embodiment is not limited to the circuit diagram in FIG. 6.

More particularly, the input unit 12 includes a first terminal N1 and a second terminal N2. The first terminal N1 and the second terminal N2 are, for example, the positive terminal and the negative terminal, respectively, or the hot wire terminal and the neutral terminal, respectively. To make it easily understood, the first terminal N1 and the second terminal N2 are the hot wire terminal and the neutral terminal, respectively, in the present embodiment. The present invention is, however, not limited to the previous examples of the input unit 12. More particularly, the input unit 12 receives the first electrical energy E1, which is AC power. The voltage range of the AC power is between 100 V to 280 V. The present invention is, however, not limited to the previous example of the voltage range of the AC power.

The current suppression unit 14 includes a plurality of serially connected resistors R3∼R4, R8∼R9, which are installed on the hot wire terminal and the neutral terminal, respectively of the input unit 12 at the front end. Certainly, the current suppression unit 14 suppresses the transient inrush current so as to protect the power adjustment unit 15, the rectifier module 16, the output unit 20 and LEDs 2 at the back end.

The power adjustment unit 15 includes a plurality of serially connected drain resistors R1, R2 connected in parallel with a plurality of multilayered ceramic capacitors C11∼C15, C21∼C25. The multilayered ceramic capacitors C11∼C15, C21∼C25 are, for example, used as buck capacitors, which discharge to the drain resistors R1, R2 when the AC power is cut off. Certainly, the drain resistors R1, R2 may also discharge within a predetermined period of time.

To make it easily understood, the present embodiment uses two serially connected drain resistors R1, R2 connected in parallel with a plurality of multilayered ceramic capacitors C11∼C15, C21∼C25 as an example. The drain resistors R1, R2 and each of the multilayered ceramic capacitors C11∼C15, C21∼C25 are connected in parallel so as to limit the current of the first electrical energy E1. In other embodiments, the power adjustment unit 15 may include, for example, one, three or more serially connected drain resistors connected in parallel with a plurality of multilayered ceramic capacitor. The present invention is, however, not limited to the previous examples of the power adjustment unit 15.

The rectifier module 16 is, for example, a bridge rectifier. The bridge rectifier includes a plurality of diodes D1∼D4 so as to convert AC power to full-wave rectified output DC (DCout) power and output the DC power to the output unit 20. The output unit 20 includes three resistors R5∼R7 and a capacitor C3. These resistors R5∼R7 and the capacitor C3 perform compensation, voltage-dividing and filtering.

Moreover, the multilayered ceramic capacitors C11∼C15, C21∼C25 of the power adjustment unit 15, the diodes D1∼D4 of the rectifier module 16 and the resistors R5∼R7 and capacitor C3 of the output unit 20 can be combined to dynamically allocate the voltage across the multilayered ceramic capacitors C11∼C15, C21∼C25 and the load to increase the capacitance of the multilayered ceramic capacitor C11∼C15, C21∼C25 and lower the voltage across the multilayered ceramic capacitors C11∼C15, C21∼C25. If the LEDs 2 on the load are serially connected, higher power factor and better energy-saving can be achieved. The present invention is, however, not limited to the circuit diagram in FIG. 6.

Generally, multilayered ceramic capacitors are not used in AC power applications because of lower capacitance, lower withstand voltage and poorer AC characteristics. In fact, multilayered ceramic capacitors are commonly used in DC power applications or small power circuits. In other words, multilayered ceramic capacitors are usually disposed between the rectifier module 16 and the output unit 20 or at the back end of the rectifier module 16.

However, in the power adjustment unit 15 of the present embodiment, the multilayered ceramic capacitors C11∼C15, C21∼C25 are installed between the rectifier module 16 and the input unit 12 or at the front end of the rectifier module 16. In other words, the multilayered ceramic capacitors C11∼C15, C21∼C25 are used in AC power applications. Therefore, the LED power circuit 1b of the present embodiment outperforms the conventional circuit configurations to drive at least 10-W LEDs 2.

Certainly, the LED power circuit 1b also exhibits excellent immunity to electromagnetic interference (EMI). For example, the LED power circuit 1b operates normally under 30 MHZ because of the use of multilayered ceramic capacitors C11∼C15, C21∼C25 in the power adjustment unit 15 to prevent electromagnetic interference.

It should be noted that general polyester capacitors (CL), polypropylene film CBB capacitors (CBB) and electrolytic capacitors (EC) occupy larger space and have to be installed with Al substrates or metal housings for heat dissipation. However, the multilayered ceramic capacitors C11∼C15, C21∼C25 of the present embodiment occupy relatively smaller space and can be installed in series or in parallel on a printed circuit board (PCB) instead of Al substrates or metal housings for heat dissipation.

Simply put, the present embodiment has advantages over conventional designs such as smaller size, lighter weight, easier manufacture, higher temperature endurance, more stable and reliable operation, longer lifetime, more safety and lowered cost. Moreover, the LED power circuit 1b of the present embodiment can also be used with the circuit or the mosaic lamp 4 in FIG. 2, FIG. 3 or FIG. 4.

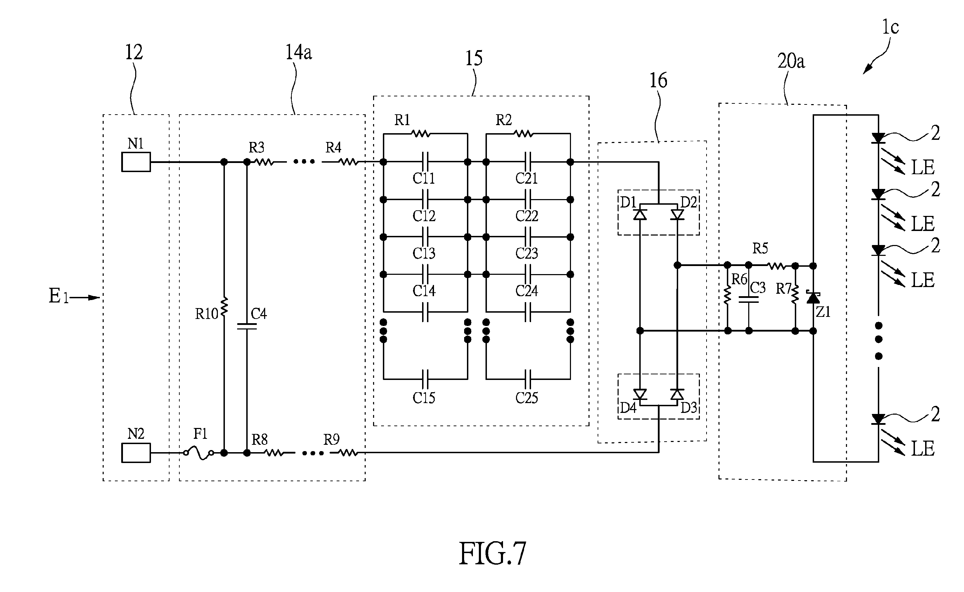

FIG. 7 is a circuit diagram of an LED power circuit according to another embodiment of the present invention. With reference to FIG. 7 and FIG. 6, the LED power circuit 1c in FIG. 7 is similar to the LED power circuit 1b in FIG. 6 except that the current suppression unit 14a in the LED power circuit 1c includes a plurality of resistors R3, R4, R8, R9, R10, a safety capacitor C4 and a fuse F1. More particularly, the resistor R10 and the safety capacitor C4 are connected in parallel and are coupled between the first terminal line and the second terminal line. Moreover, a plurality of resistors R3, R4 are serially connected on the first terminal line, and a plurality of resistors R8, R9 are serially connected on the second terminal line. The fuse F1 is serially connected between the plurality of resistors R8, R9 and the second terminal N2.

Furthermore, the safety capacitor C4 is, for example, a capacitor with resistance to constant voltages, surge voltages and transient voltages. Practically, the safety capacitor C4 meets the requirement of withstanding transient high voltages from, for example, lightning strokes, spark discharges and surge voltage when turning on electrical appliances. Moreover, the fuse F1 may blow out to protect the circuits and devices at back stages when overvoltage or over-current occurs. Simply put, the current suppression unit 14a of the present embodiment uses the plurality of resistors R3, R4, R8, R9, R10, the safety capacitor C4 and the fuse F1 to protect the circuits and devices at back stages. The present invention is, however, not limited to the previous examples of the current suppression unit 14a and the circuit and devices it protects.

The output unit 20a includes a plurality of resistors R5, R6, R7, a capacitor C3 and a Zener diode Z1. More particularly, the Zener diode Z1 is used for voltage regulation for the load. Practically, the resistors R6, R7, the capacitor C3 and the Zener diode Z1 are connected in parallel with the LEDs 2 on the load and the resistor R5 is serially connected to the LEDs 2, as shown in FIG. 7. It should be noted that the LED power circuit 1c of the present invention may also be used in backlight modules for liquid-crystal display (LCD) TVs, LCD displays and other display panels. The present invention is, however, not limited to the previous examples of the applications of the LED power circuit 1c.

As stated above, the LED power circuit of the present invention is capable of receiving a large range of input voltage. More particularly, the current suppression unit suppresses a current pulse to protect the electronic device or the LEDs from being damaged by the current pulse. The rectifier module provides output DC power to drive the LEDs to consume power constantly. The power adjustment unit and the current suppression unit form a circuit capable of adjusting the power factor and the conversion efficiency of the AC power. The power adjustment unit adjusts power consumption to lower the power consumption of the LEDs to lower heat accumulation. Moreover, the power adjustment unit, the rectifier module and the output unit can be combined as a circuit for increasing the capacitance of the multilayered ceramic capacitor (MLCC) and lowering the voltage across the multilayered ceramic capacitor (MLCC) so as to lengthen the lifetime, and reduce the size as well as the weight of the LED power circuit.

The above-mentioned descriptions represent merely the exemplary embodiment of the present disclosure, without any intention to limit the scope of the present disclosure thereto. Various equivalent changes, alterations or modifications based on the claims of present disclosure are all consequently viewed as being embraced by the scope of the present disclosure.

## Claims

1. A light-emitting diode (LED) power circuit capable of converting a first electrical energy (E1) to a second electrical energy (E2) and outputting said second electrical energy (E2) to drive at least one LED, said at least one LED converting said second electrical energy (E2) to light, said first electrical energy (E1) being alternating-current (AC) power and said second electrical energy (E2) being direct-current (DC) power, wherein said LED power circuit (1) comprises:
an input unit (12) for receiving said first electrical energy (E1);
a current suppression unit (14) being coupled to said input unit (12), said current suppression unit (14) suppressing a current pulse and correspondingly outputting said first electrical energy (E1);
a power adjustment unit (15) being coupled to said current suppression unit (14), said power adjustment unit (15) controlling and adjusting the current and the power of said first electrical energy (E1);
a rectifier module (16) being coupled to said power adjustment unit (15), said rectifier module (16) converting said first electrical energy (E1) to said second electrical energy (E2); and
an output unit (20) being coupled to said rectifier module (16) and said at least one LED, said output unit (20) outputting said second electrical energy (E2) to said at least one LED.

2. The LED power circuit (1) of claim 1, wherein said power adjustment unit (15) comprises a drain resistor (R1,R2) connected in parallel with a multilayered ceramic capacitor (C11∼C15,C21∼C25), a drain resistor (R1,R2) connected in parallel with a plurality of multilayered ceramic capacitors (C11∼C15,C21∼C25), or a plurality of serially connected drain resistors (R1,R2) connected in parallel with a plurality of multilayered ceramic capacitors (C11∼C15,C21∼C25).

3. The LED power circuit (1) of claim 2, wherein said power adjustment unit (15), said rectifier module (16) and said output unit (20) form a circuit capable of increasing the capacitance of said multilayered ceramic capacitor (C11∼C15,C21∼C25) and lowering the voltage across said multilayered ceramic capacitor (C11∼C15,C21∼C25).

4. The LED power circuit (1) of claim 2, wherein said power adjustment unit (15) determines the capacitance of said multilayered ceramic capacitor (C11∼C15,C21∼C25) or said plurality of multilayered ceramic capacitors (C11∼C15,C21∼C25) according to the load current of said at least one LED and the operation frequency of said first electrical energy (E1).

5. The LED power circuit (1) of claim 1, wherein said power adjustment unit (15) and said current suppression unit (14) form a circuit capable of adjusting the power factor and the conversion efficiency of said AC power.

6. The LED power circuit (1) of claim 1, wherein said current suppression unit (14) comprises two sets of serially connected resistors (R3∼R4,R8∼R9), said two sets of serially connected resistors (R3∼R4,R8∼R9) are disposed, respectively, on a first terminal line and a second terminal line of said input unit (12), said rectifier module (16) is a full-wave rectifier circuit or a half-wave rectifier circuit, said rectifier module (16) receives said first electrical energy (E1) and outputs said second electrical energy (E2) to said output unit (20), and said output unit (20) comprises a plurality of resistors (R5-R7) and capacitors (C3).

7. A light-emitting diode (LED) power circuit capable of converting a first electrical energy (E1) to a second electrical energy (E2) and outputting said second electrical energy (E2) to drive at least one LED, said at least one LED converting said second electrical energy (E2) to light, said first electrical energy (E1) being alternating-current (AC) power and said second electrical energy (E2) being direct-current (DC) power, wherein said LED power circuit (1) comprises:
an input unit (12) for receiving said first electrical energy (E1);
a current suppression unit (14) being coupled to said input unit (12), said current suppression unit (14) suppressing a current pulse and correspondingly outputting said first electrical energy (E1);
a rectifier module (16) being coupled to said current suppression unit (14), said rectifier module (16) converting said first electrical energy (E1) to said second electrical energy (E2);
a constant current control unit (18) being coupled to said rectifier module (16), said constant current control unit (18) adjusting said second electrical energy (E2) to output a constant output DC current; and
an output unit (20) being coupled to said rectifier module (16), said output unit (20) outputting said output DC current to said at least one LED.

8. The LED power circuit (1) of claim 7, wherein said rectifier module (16) further comprises a rectifier unit (162), a filter unit (164) and an electrical energy adjustment unit (166), said filter unit (164) being coupled to said rectifier unit (162) and said electrical energy adjustment unit (166), respectively, said first electrical energy (E1) being full-wave rectified or half-wave rectified by said rectifier unit (162), said filter unit (164) determining said output DC current from said first electrical energy (E1) being rectified, and said electrical energy adjustment unit (166) receiving said output DC current to output said second electrical energy (E2).

9. The LED power circuit (1) of claim 7, wherein said rectifier module (16) further comprises a transformer, said transformer determining the voltage of said first electrical energy (E1), wherein said transformer is a center-tapped transformer so that said first electrical energy (E1) is full-wave rectified by said center-tapped transformer.

10. The LED power circuit (1) of claim 7, wherein said current suppression unit (14) is a Zener diode (Z1), said constant current control unit (18) comprises a transistor and a plurality of diodes, and said transistor and said plurality of diodes enable said rectifier module (16) to output said second electrical energy (E2) with said constant output DC current.

11. A lamp comprising the LED power circuit (1) of claim 1.
